# EUROPEAN PATENT APPLICATION

(11) **EP 3 023 667 A1**
(43) Date of publication of application: **25.05.2016**
(21) Application number: 15191299.5
(22) Date of filing: 23.10.2015
(51) Int. Cl.: F16D 66/02, B60T 17/22

(54) **BRAKE PAD WEAR MONITORING SYSTEM**

(30) Priority: 21.11.2014 US 201414550151
(71) Applicant: ArvinMeritor Technology, LLC, Troy, MI 48084 (US)
(72) Inventor: Philpott, Daniel, Oxford, MI Michigan 48370 (US)
(74) Representative: Jones, John Bryn

(57) **Abstract**

A brake monitoring system that may include a brake pad wear sensor module that may be configured to detect wear of a friction material of a brake pad assembly. The brake pad wear sensor module may transmit a signal that may be indicative of a wear condition of the friction material.

## Description

### TECHNICAL FIELD

This patent application relates to a brake pad wear monitoring system.

### BACKGROUND

A brake pad wear sensor is disclosed in U.S. Patent No. 6,302,241.

### SUMMARY

In at least one embodiment, a brake monitoring system is provided. The brake monitoring system may include a brake pad wear sensor module and a diagnostic device that may communicate with the brake pad wear sensor module via a terminal. The diagnostic device may further include a user interface. The diagnostic device may receive a signal from the brake pad wear sensor module indicative of a wear condition of a friction material and may provide a first output via the user interface when the signal indicates a first brake pad wear level and may provide a second output via the user interface when the signal indicates a second brake pad wear level.

In at least one embodiment, a brake monitoring system is provided. The brake monitoring system may include a brake pad wear sensor module configured to detect wear of a friction material of a brake pad assembly and a controller that wirelessly communicates with the brake pad wear sensor module. The brake monitoring system may further include a user interface that may communicate with the controller. The brake pad wear sensor module may transmit a signal indicative of a wear condition of the friction material.

In at least one embodiment, a brake monitoring system is provided. The brake monitoring system may include a friction brake having a friction material and a brake pad wear sensor module disposed proximate the friction brake. The brake pad sensor module may provide a signal indicative of wear of the friction material. The brake monitoring system may further include an antilock braking system that includes a controller that may control operation of the friction brake and may receive the signal from the brake pad wear sensor module and a user interface that may communicate with the controller. The controller may provide an antilock braking system warning via the user interface in response to the signal indicating wear of friction material of the friction brake greater than a threshold.

### BRIEF DESCRIPTION OF THE DRAWINGS

Figure 1 is a schematic view of vehicle.
Figure 2 is a perspective view of a vehicle brake assembly and brake pad wear monitoring system.
Figure 3 is a schematic view of a brake pad wear sensor module.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

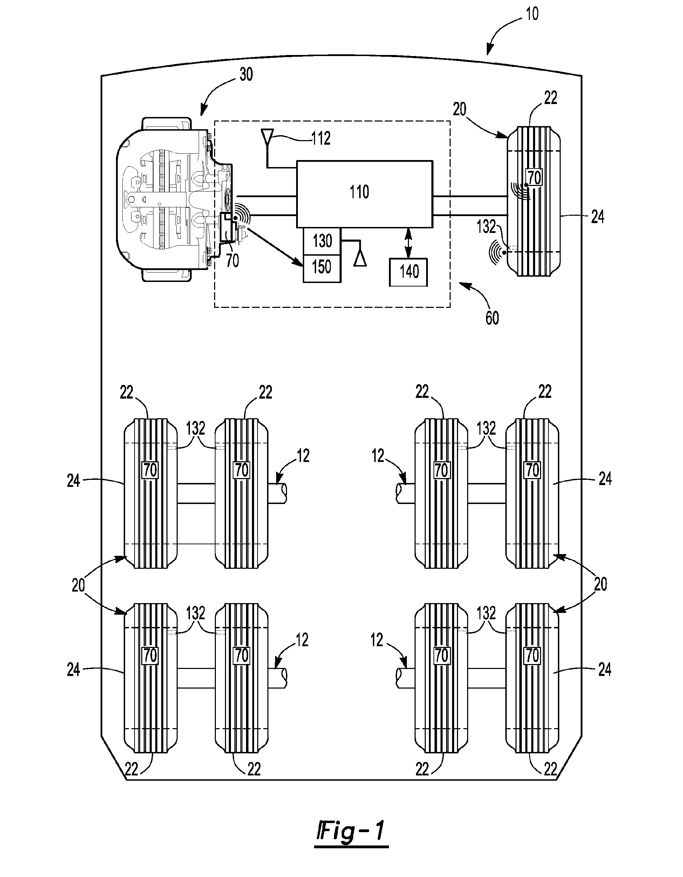

Referring to Figure 1 an exemplary vehicle 10 is shown. The vehicle may be a motor vehicle like a truck, bus, farm equipment, military transport or weaponry vehicle, or cargo loading equipment for land, air, or marine vessels, or a trailer that may be provided with a motor vehicle.

The vehicle 10 may include a plurality of axles or axle assemblies 12 that may support and facilitate rotation of at least one wheel assembly 20. Only fragmentary portions of the axle assemblies 12 that are disposed near the bottom of Figure 1 are shown for clarity. An axle assembly 12 may or may not be configured as a drive axle that provides torque to at least one wheel assembly 20. In addition, an axle assembly 12 may or may not be configured to steer the vehicle 10. Moreover, an axle assembly 12 may be configured as or may include a steering knuckle assembly in a non-drive axle configuration.

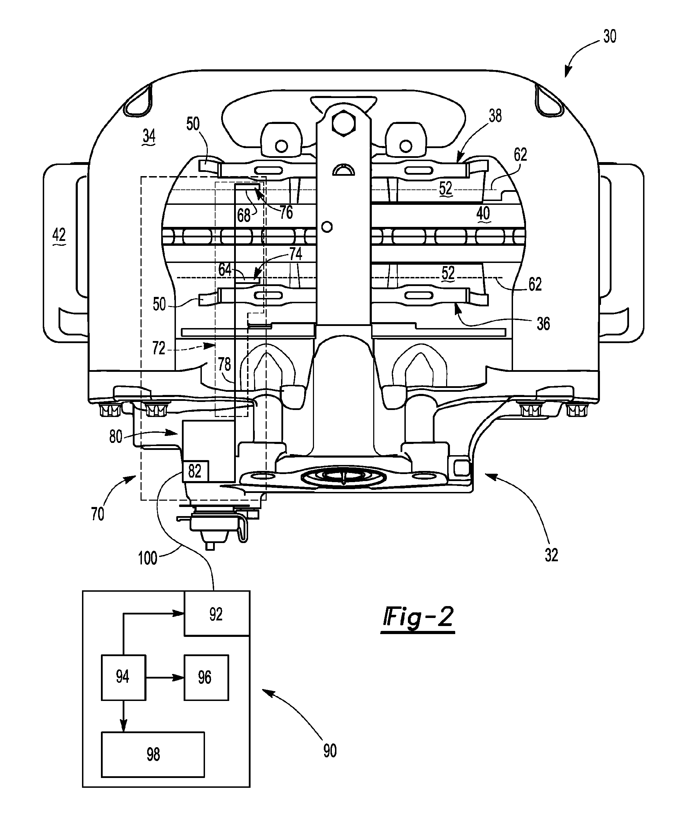

Each wheel assembly 20 may include at least one inflatable tire 22 that may be mounted on an associated wheel 24 and a vehicle brake assembly 30. As shown in Figure 2, the vehicle brake assembly 30 may include a housing assembly 32, a caliper bridge 34, a first brake pad assembly 36 and a second brake pad assembly 38 that may be disposed proximate a rotor 40 and that may be received within a carrier 42.

The housing assembly 32 may receive and position various components of the vehicle brake assembly 30. The carrier 42 may facilitate positioning of the first brake pad assembly 36 and the second brake pad assembly 38 with respect to a rotor 40, which may also be called a brake disc, to facilitate braking of the vehicle 10.

The housing assembly 32 may be coupled to the caliper bridge 34 and the carrier 42. The carrier 42 may be integrally formed with the caliper bridge 34 or mounted to the caliper bridge 34 via mounting screws or a slide pin assembly.

The caliper bridge 34 and the housing assembly 32 may be movably disposed on the carrier 42. For example, the housing assembly 32 may be slidably disposed on the slide pin assembly. The slide pin assembly may be fixedly disposed on the carrier 42 and may interconnect the caliper bridge 34 and the housing assembly 32.

The carrier 42 may be fixedly mounted to the vehicle 10. For example, the carrier 42 may be connected to an axle assembly 12 or steering knuckle (not shown) with an intermediate component such as a torque plate in one or more embodiments. The carrier 42 may straddle and be spaced apart from the rotor 40 and may help position the first and second brake pad assemblies 36, 38 on opposite sides of the rotor 40. More specifically, the first brake pad assembly 36 may be disposed proximate an inboard side of the brake rotor and the second pad assembly 38 may be disposed proximate an outboard side of the brake rotor.

The engagement of the first brake pad assembly 36 with the inboard side of the rotor and the engagement of the second brake pad assembly 38 with the outboard side of the rotor 40 may provide a clamping force to inhibit or retard the rotary motion of the rotor 40. The clamping force may result from depression of a brake pedal by the operator of the vehicle 10. The retarding of the rotary motion of the rotor 40 may slow the rotation of a wheel assembly 20.

The caliper bridge 34 may reactively translate the second brake pad assembly 38 toward the outboard side of the rotor 40. The combination of the housing assembly 32 and the caliper bridge 34 may slide on or relative to the slide pin assembly. This arrangement may be referred to as "pin slider calipers" or "reaction beam calipers".

In at least one embodiment, the first and second brake pad assemblies 36, 38 may have similar or identical configurations. The first and second brake pad assemblies 36, 38 may each include a backing plate 50 and a friction material 52 that may be fixedly disposed on a surface of the backing plate 50. The backing plate 50 may be a structural member of a brake pad assembly 36, 38. The backing plate 50 may be made of any suitable material, such as a metal or metal alloy.

The friction material 52 may face toward and be spaced apart from the rotor 40 when the first and second brake pad assemblies 36, 38 are in their first and second retracted positions prior to actuation. The friction material 52 may engage the rotor 40 during vehicle braking, such as when the first and second brake pad assemblies 36, 38 are actuated to or toward first and second extended positions, respectively.

The frictional engagement of the friction material 52 with the rotating rotor 40 may result in the gradual wearing of the friction material 52. The continued wear of the friction material 52, without replacement, may lead to the backing plate 50 contacting a surface of the rotor 40. The contact between the backing plate 50 and the rotor 40 may result in damage to the rotor 40 and ultimately to the vehicle brake assembly 30.

A brake monitoring system 60 may be provided. The brake monitoring system 60 may be capable of providing an indication when a friction material wear limit has been reached. The threshold brake pad wear limit, represented by dotted line 62, may be spaced apart from the backing plate 50 and may indicate an amount of wear that the friction material 52 may incur before replacement of the first and/or second brake pad assemblies 36, 38 is desired.

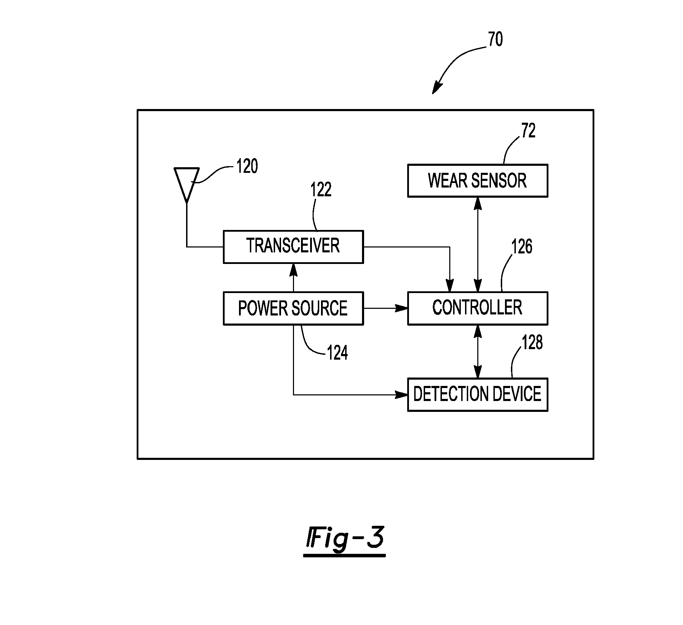

Referring to Figures 2 and 3, the brake monitoring system 60 may include a brake pad wear sensor module 70. The brake pad wear sensor module 70 may be configured to detect wear of the friction material 52 of the first and/or second brake pad assemblies 36, 38. The brake pad wear sensor module 70 may provide wear information or data indicative of wear of the friction material 52 of the first and/or second brake pad assemblies 36, 38 to a vehicle monitoring system or control system.

The brake pad wear sensor module 70 may include a brake pad wear sensor 72, which may be referred to as a brake pad wear warning indicator. The brake pad wear sensor 72 may be provided with a first connector 74 and a second connector 76 that may be connected by a cable 78 with a discrete module 80.

The first connector 74 may be received within a first recess 64 that may be defined by the friction material 52 of the first brake pad assembly 36. The first connector 74 may engage a contact that may be disposed within the first recess 64. The first recess 64 may be disposed at a location corresponding to the wear limit of the first brake pad assembly 36. The second connector 76 may be received within a second recess 68 defined by the friction material 52 of the second brake pad assembly 38. The second connector 76 may engage a contact that may be disposed within the second recess 68. The second recess 68 may be disposed at a location corresponding to the wear limit of the second brake pad assembly 38.

The discrete module 80 of the brake pad wear sensor module 70 may be provided with a terminal connector 82 that may be spaced apart from the first and second connectors 74, 76. The terminal connector 82 may be configured to engage and/or communicate with a diagnostic device 90.

The diagnostic device 90 may be provided with a connector 92 that may be configured to engage the terminal connector 82 of the brake pad wear sensor module 70. The connector 92 may be in communication with a power source 94, a controller 96, and a user interface 98. The diagnostic device 90 may provide power to the brake pad wear sensor module 70 and in response, the brake pad wear sensor module 70 may provide a signal indicative of the wear condition of the friction material 52.

A cable 100 may be interposed the terminal connector 82 and the connector 92 to electrically connect the diagnostic device 90 to the brake pad wear sensor module 70. The controller 96 may communicate or may receive the signal and using control logic and may determine the wear condition of the friction material 52 of the first and/or second brake pad assemblies 36, 38. The controller 96 may output for display the wear condition of the friction material 52 to the user interface 98.

The diagnostic device 90 may measure a voltage, resistance, and/or current across the first and second connectors 74, 76. The measured voltage, resistance, and/or current may indicate the wear condition of the friction material 52 of the first and second brake pad assemblies 36, 38. Therefore, as the friction material 52 wears, the measured value may change.

For example, the diagnostic device 90 may be provided with a look-up table or algorithm that may provide a voltage range indicative of wear of the friction material of the first and second brake pad assemblies 36, 38. A first voltage range may be indicative of a first brake pad wear level in which the wear of the friction material 52 of the first and second brake pad assemblies 36, 38 may be greater than the brake pad friction material wear limit 62.

As the brake pad friction material wear limit 62 has been reached or exceeded, the first connector 74 and/or the second connector 76 may contact the rotor 40. The contact of the first connector 74 or the second connector 76 may result in a short to ground. The short to ground may be indicated as a measured voltage of approximately zero. Therefore, the first voltage range may be a voltage range proximate zero volts.

The diagnostic device 90 may provide a first output corresponding to a first brake pad wear level via the user interface 98 when the signal provided by the brake pad wear sensor module 70 indicates the first brake pad wear level.

A second voltage range may be indicative of a second brake pad wear level in which the wear of the friction material may be less than the brake pad friction material wear limit 62. The second voltage range may be greater than the first voltage range.

The diagnostic device 90 may provide a second output corresponding to the second brake pad wear level via the user interface 98. The second output may be provided when the signal provided by the brake pad wear sensor module 70 indicates the second brake pad wear level.

A third voltage range may be indicative of a third brake pad wear level proximate the brake pad friction material wear limit 62. The third brake pad wear level may be indicative of wear of the friction material proximate the brake pad friction material wear limit 62 where the first and second brake pad assemblies 36, 38 may not yet require replacement. The third voltage range may be greater than the first voltage range and less than the second voltage range.

The diagnostic device 90 may provide a third output corresponding to the third brake pad wear level via the user interface 98. The third output may be provided when the signal provided by the brake pad wear sensor module 70 indicates the third brake pad wear level.

In at least one embodiment, the user interface may provide an auditory signal as to the wear level of the first and second brake pad assemblies 36, 38. The user interface may also provide vibratory or haptic feedback as to the wear level of the first and second brake pad assemblies 36, 38.

In at least one embodiment, the user interface 98 may be provided with indicator lights. For example, a first indicator light may correspond to the first output, a second indicator light may correspond to the second output, and a third indicator light may correspond to the third output. The first indicator light may be a red light indicating that the first and second brake pad assemblies 36, 38 may require replacement. The second indicator light may be a green light indicating that the first and second brake pad assemblies 36, 38 may not require replacement. The third indicator light may be a yellow light indicating that the first and second brake pad assemblies 36, 38 may soon require replacement.

In at least one embodiment, the user interface 98 may be provided with a display screen. The display screen may be configured to provide a visual indicator to display the various wear levels of the first and second brake pad assemblies 36, 38. The display screen may display in text or symbols whether the first and second brake pad assemblies require replacement, may soon require replacement, or do not require replacement.

Referring to Figure 3, the brake pad wear sensor module 70 may be configured to transmit a signal indicative of a wear condition of the friction material 52 of the first and/or second brake pad assemblies 36, 38 to a remotely located vehicle monitoring system. The remotely located vehicle monitoring system may be a vehicle controller 110, such as that shown in Figure 1. The brake pad wear sensor module 70 may include a wireless module, the brake pad wear sensor 72, a power source 124, and a module controller 126.

The vehicle controller 110 may be configured to wirelessly communicate with the brake pad wear sensor module 70. The vehicle controller 110 may be provided with a transceiver that may be in communication with an antenna 112 to communicate a polling signal to the brake pad wear sensor module 70. The wireless module of the brake pad wear sensor module 70 may include an antenna 120 that may be in communication with a transceiver 122 that may be configured to receive the polling signal provided by the vehicle controller 110.

It is contemplated that the transceiver 122 may be provided as a separate transmitter and receiver. The transmitter and the receiver may be in communication with each other and function as the above described transceiver.

The polling signal may be transmitted by the vehicle controller 110 to the brake pad wear sensor module 70 in response to vehicle start up. Alternatively, the polling signal may be transmitted by the vehicle controller 110 in response to a user command received via a user interface 140.

In response to the brake pad wear sensor module 70 receiving the polling signal from the vehicle controller 110, the power source 124 of the brake pad wear sensor module 70 may provide power to the brake pad wear sensor 72. The brake pad wear sensor 72 may then provide a signal indicative of the wear condition of the friction material 52 of the first and second brake pad assemblies 36, 38 to the module controller 126.

In at least one embodiment, the brake pad wear sensor module 70 may be configured to transmit the signal to the vehicle controller 110 in response to detecting vehicle motion. The brake pad wear sensor module 70 may be provided with a detection device 128 such as a vibration triggered switch. The signal indicative of a wear condition of the friction material 52 may be transmitted to the vehicle controller 110 once every drive cycle (e.g., once between turning the vehicle on and off and/or when vehicle movement is detected) due to the slow wear rate of the friction material of the first and second brake pad assemblies 36, 38.

The module controller 126 may be provided at least one microprocessor configured to receive the signal indicative of the wear condition of the friction material 52 of the first and second brake pad assemblies 36, 38. The at least one microprocessor may process the signal indicative of the wear condition of the friction material 52 of the first and second brake pad assemblies 36, 38 into a format or protocol compatible with various vehicle subsystems.

For example, the brake pad wear sensor 72 may provide the signal indicative of the wear condition of the friction material 52 of the first and second brake pad assemblies 36, 38 in a format or protocol that may be compatible or incompatible with a tire pressure monitoring system (TPMS) 130 and/or an anti-lock braking system (ABS) 150 that may be in communication with the vehicle controller 110. The at least one processor of the module controller 126 may process or condition the signal into a format or protocol compatible with the TPMS 130 or ABS 150 in communication with the vehicle controller 110. The signal transmitted by the brake pad wear sensor 72 may be transmitted simultaneously with a signal indicative of pressure of a tire 22 that is braked by an associated brake pad assembly or associated brake pad assemblies 36, 38.

The brake pad wear sensor module 70 may transmit the signal via the wireless module to a remote unit 132. The remote unit 132 may be associated with the TPMS 130. The remote unit 132 may be configured to receive the signal and transmit the signal to the TPMS 130 in communication with the vehicle controller 110.

A remote unit 132 may be associated with each wheel assembly 20 that may be braked by the vehicle brake assembly 30. The remote unit 132 may be configured to monitor an internal pressure of the inflatable tire 22 associated with a wheel 24. The remote unit 132 may be configured to simultaneously transmit the signal indicative of the wear condition of the friction material 52 of the first and second brake pad assemblies 36, 38 with the signal indicative of pressure of the inflatable tire 22.

The vehicle controller 110 may compare the signal indicative of the wear condition of the friction material 52 to the threshold brake pad friction material wear limit 62. In response to a first brake pad wear level corresponding to wear of the friction material 52 greater than the threshold brake pad friction material wear limit 62, the vehicle controller 110 may output for display a first indicator. The first indicator may be displayed via a user interface 140 in communication with the vehicle controller 110 indicating that the first and second brake pad assemblies 36, 38 require replacement.

In response to a second brake pad wear level corresponding to wear of the friction material 52 less than the threshold brake pad wear limit, the vehicle controller 110 may output for display a second indicator. The second indicator may be displayed via the user interface 140 indicating that the first and second brake pad assemblies 36, 38 may not require replacement.

In at least one embodiment, the brake pad wear sensor module 70 may be in communication with the ABS 150. The brake pad wear sensor module 70 may interface with an ABS module harness. The ABS 150 may control operation of the vehicle brake assembly 30 or friction brake. The brake pad wear sensor module 70 may provide a signal indicative of wear of the friction material 52 of the friction brake to the vehicle controller 110 in communication with the ABS 150.

Based on the signal indicative of the wear state of the friction material 52, the brake pad wear sensor module 70 may pass the signal through the ABS 150 to the vehicle controller 110. The pass through of the signal may indicate that the wear state of the friction material 52 may be less than the threshold brake pad friction material wear limit 62. The pass through may indicate that the first and second brake pad assemblies 36, 38 may not require replacement. As such, the vehicle controller 110 may provide an antilock braking system warning or warning via or indicative of the that status of the ABS 150 via the user interface 140 in response to the signal indicating wear of friction material 52 that is greater than or that exceeds a threshold or the threshold brake pad friction material wear limit 62.

The signal may be interrupted by the brake pad wear sensor module 70 such that an ABS fault may be displayed via the user interface 140. The interruption of the signal may indicate that the wear state of the friction material 52 may be greater than the threshold brake pad friction material wear limit 62. The ABS fault may indicate that the first and second brake pad assemblies 36, 38 require replacement.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A brake monitoring system comprising:
a brake pad wear sensor module for detecting wear of a friction material of a brake pad assembly, the brake pad wear sensor module having a terminal; and
a diagnostic device that communicates with the brake pad wear sensor module via the terminal, the diagnostic device having a user interface;
wherein the diagnostic device receives a signal from the brake pad wear sensor module indicative of a wear condition of the friction material and wherein the diagnostic device provides a first output via the user interface when the signal indicates a first brake pad wear level and provides a second output via the user interface when the signal indicates a second brake pad wear level.

2. The brake monitoring system of claim 1 wherein the diagnostic device provides power to the brake pad wear sensor module via a cable that is electrically connected to the terminal and in response to the power provided, the diagnostic device receives the signal indicative of the wear condition of the friction material.

3. The brake monitoring system of claim 1 wherein the brake pad wear sensor module further comprises a connector that is spaced apart from the terminal and disposed proximate the friction material of the brake pad assembly at a location corresponding to a friction material wear limit.

4. The brake monitoring system of claim 1 wherein the diagnostic device provides a third output via the user interface when the signal is indicative of a third brake pad wear level.

5. The brake monitoring system of claim 4 wherein the first brake pad wear level corresponds to a first voltage range indicative of wear of the friction material of the brake pad assembly that is greater than a friction material wear limit and the second brake pad wear level corresponds to a second voltage range indicative of wear of the friction material of the brake pad assembly that is less than the friction material wear limit.

6. The brake monitoring system of claim 5 wherein the third brake pad wear level corresponds to a third voltage range indicative of wear of the friction material of the brake pad assembly proximate a friction material wear limit, the first voltage range is less than the second voltage range, and the third voltage range is less than the second voltage range and greater than the first voltage range.

7. The brake monitoring system of claim 4 wherein the first output, second output, and third output are at least one of an auditory signal, visual indicator, and haptic feedback.

8. A brake monitoring system comprising:
a brake pad wear sensor module configured to detect wear of a friction material of a brake pad assembly of a friction brake;
a controller that wirelessly communicates with the brake pad wear sensor module; and
a user interface that communicates with the controller;
wherein the brake pad wear sensor module transmits a signal indicative of a wear condition of the friction material in response to a polling signal provided by the controller.

9. The brake monitoring system of claim 8 wherein the brake pad wear sensor module is provided with a detection device configured to detect vehicle motion, wherein the brake pad wear sensor module transmits the signal indicative of a wear condition of the friction material when a vehicle is in motion.

10. The brake monitoring system of claim 8 wherein the controller controls a tire pressure monitoring system that is configured to monitor an internal pressure of a tire, and the signal transmitted by the brake pad wear sensor module is transmitted in a protocol compatible with the tire pressure monitoring system.

11. The brake monitoring system of claim 8 wherein the controller controls a tire pressure monitoring system that is configured to monitor an internal pressure of a tire and the signal transmitted by the brake pad wear sensor module is transmitted in a protocol incompatible with the tire pressure monitoring system.

12. The brake monitoring system of claim 8 wherein the controller controls a tire pressure monitoring system that is configured to monitor an internal pressure of a tire and the signal transmitted by the brake pad wear sensor is transmitted simultaneously with a signal indicative of pressure of a tire that is braked by the brake pad assembly.

13. The brake monitoring system of claim 8 wherein the polling signal is provided in response to a user command received via the user interface.

14. The brake monitoring system of claim 8 wherein the controller outputs for display a first indicator via the user interface when the signal indicates a first brake pad wear level and outputs for display a second indicator via the user interface when the signal indicates a second brake pad wear level, wherein the first brake pad wear level corresponds to wear of the friction material of the brake pad assembly greater than a threshold and the second brake pad wear level corresponds to wear of the friction material of the brake pad assembly less than the threshold.

15. The brake monitoring system of claim 1 or claim 8 further comprising:
an antilock braking system that includes a controller that controls operation of the friction brake and receives the signal from the brake pad wear sensor module; and
a user interface that communicates with the controller;
wherein the controller provides an antilock braking system warning via the user interface in response to the signal indicating wear of friction material of the friction brake greater than a threshold.
